Europäisches Patentamt

**European Patent Office**

**Office européen des brevets**

(11) Numéro de publication: **0 006 776**
**B1**

(12) **FASCICULE DE BREVET EUROPEEN**

(45) Date de publication du fascicule du brevet:
**18.04.84**

(21) Numéro de dépôt: **79400337.6**

(22) Date de dépôt: **29.05.79**

(51) Int. Cl.³: **C 02 F 1/40, E 01 H 12/00,**
**C 09 K 3/32**

(54) Procédé pour le traitement de matières polluantes formées d'hydrocarbures rejetés en mer, de boues résiduaires, ou d'eaux usées.

(30) Priorité: **30.05.78 FR 7816009**
**17.10.78 FR 7829532**
**18.05.79 FR 7912702**

(43) Date de publication de la demande:
**09.01.80 Bulletin 80/1**

(45) Mention de la délivrance du brevet:
**18.04.84 Bulletin 84/16**

(84) Etats contractants désignés:
**AT BE CH DE GB IT LU NL SE**

(56) Documents cités:
**BE - A - 710 964**
**FR - A - 846 310**
**FR - A - 1 570 245**
**FR - A - 2 168 060**

(73) Titulaire: **Tillie, Etienne, Route de Saint Paul, F-06480 la Colle sur Loup (FR)**

(72) Inventeur: **Tillie, Etienne, Route de Saint Paul, F-06480 la Colle sur Loup (FR)**

(74) Mandataire: **Weinstein, Zinovi et al, Cabinet Z. WEINSTEIN 31, Cuvillierstrasse, D-8000 München 80 (DE)**

ACTORUM AG

# Procédé pour le traitement de matières polluantes formées d'hydrocarbures rejetés en mer, de boues résiduaires ou d'eaux usées

L'invention concerne généralement un procédé de traitement de matières polluantes, et a plus particulièrement pour objet le traitement des hydrocarbures rejetés en mer accidentellement ou délibérément par des navires pétroliers, ces hydrocarbures pouvant être traités aussi bien au niveau des nappes qu'ils forment à la surface de la mer qu'au niveau des plages lorsque ces hydrocarbures ont atteint les côtes, ainsi que le traitement des eaux usées et des boues résiduaires quelles qu'en soient l'origine et la consistance et notamment celles provenant des stations d'épuration des effluents d'égouts.

Dans l'état actuel des moyens connus de lutte contre la pollution des plages provoquée notamment par des hydrocarbures rejetés en mer, il apparaît que l'on soit démuni de tout système efficace de protection et de récupération. Cette situation est due autant à la nature du polluant qu'à l'ampleur de la catastrophe. Dans certains cas, on se contente de transférer la pollution de place, dans d'autres cas, il semble que le remède soit pire que le mal, à moins que l'on choisisse comme solution de facilité d'attendre la biodégradation du pétrol brut, ce qui peut prendre des années.

Toutefois, on connaît actuellement deux façons de procéder au nettoyage des plages et terrains pollués. L'un est mécanique mais inadapté, l'autre est manuel mais aléatoire.

Le procédé mécanique, lorsque l'on dispose d'engins motorisés de terrassement communément appelés bulldozers, scrapers, autochargeurs, consiste à rassembler en tas le sable mélangé aux hydrocarbures et à effectuer le déblaiement par des camions équipés de bennes basculantes. La mise en remblai a lieu à terre soit en tas, soit dans des trous naturels ou excavations.

Le procédé manuel consiste à creuser manuellement de place en place des trous peu profonds dans le sable et d'y rassembler à la pelle la couche d'hydrocarbures tout en extrayant le pétrole brut au fur et à mesure soit au seau pour en remplir des cuves, soit au moyen de pompes spéciales du genre «pompes à lisier» capables d'aspirer et de refouler les liquides visqueux ou «chargés». Le transport est ensuite effectué par des camions ou des wagons citernes.

Ces deux procédés précités sont les seuls à être actuellement appliqués. Il convient de reconnaître que l'un est inadapté et manque d'efficacité et que l'autre est long et coûteux.

Dans le cas du procédé mécanique, l'utilisation d'engins de terrassement entraîne forcément l'enlèvement de quantités importantes de sable nettement disproportionnées au volume de pétrole brut contenu in situ. Les hydrocarbures mélangés au sable sont irrécupérables, que ce soit sous la forme de pétrole ou de matières combustibles. De plus, ce procédé de nettoyage incomplet et grossier qui consiste à extraire d'un endroit les masses polluantes qui s'y sont installées pour les transférer en d'autres lieux sans solliciter au préalable l'avis des populations avoisinantes, a pour conséquence immédiate de stériliser des hectares de terre, de constituer des zones dangereuses pour les hommes et les animaux et, pour le moins, de défigurer le paysage et de déprécier la valeur des terrains situés à proximité. A terme, ces masses polluantes traitées de cette façon risquent de se déplacer sous l'action des éléments naturels et sont susceptibles d'empoisonner les nappes phréatiques. Bien plus, en été, les gaz délétères risquent alors de se dégager sous l'action de la chaleur, d'incommoder toute une région et de s'enflammer spontanément ou accidentellement. Ce procédé constitue un réel et grave danger pour la population avoisinante, les promeneurs et les animaux.

Dans le cas du procédé manuel, il est nécessaire d'employer une main-d'œuvre importante qu'il faut équiper d'un matériel de protection adéquate. Plusieurs milliers de personnes peuvent de ce fait être exposées aux risques d'intoxication et d'allergie, ce qui nécessite une surveillance médicale indispensable. De plus, le travail est long, fastidieux, pénible et décourageant: d'autant que souvent la marée suivante efface toutes traces de l'intervention précédente et qu'il faut recommencer. Il convient cependant de remarquer que le pétrole brut ainsi recueilli peut être envoyé aux raffineries pour y subir les opérations de cracking du cycle normal de raffinage. Néanmoins, les hydrocarbures ainsi récupérés peuvent contenir de l'eau de mer, des résidus de végétation aquatique et même du sable. Il en résulte, après décantation, une masse gênante de produits difficiles à neutraliser. L'invention a pour but de résoudre tous les problèmes posés par les procédés antérieurs qui s'avèrent inadaptés et rudimentaires, d'en éviter les inconvénients et propose à cet effet une technique particulièrement, nouvelle et totalement intégrée en faisant appel à l'utilisation et à la mise en œuvre de différentes matières propres à séquestrer ces hydrocarbures avec promptitude. Le procédé permet la transformation des hydrocarbures en une plaque solide qui facilite le déblaiement en laissant une découverte de terrain propre, prévoit le stockage convenable et sans danger des matériaux récupérés, rend possible leur utilisation énergétique ultérieure sous une forme granulaire combustible. En d'autres termes, le procédé conforme à l'invention permet le nettoyage complet et accéléré des plages entre deux marées ou bien, par abandon temporaire du revêtement ainsi constitué, prévient l'infiltration des hydrocarbures susceptibles de se déposer à nouveau au cours des flux et reflux successifs.

En ce qui concerne l'état actuelle de la technologie relative à la récupération en mer des hydrocarbures provenant d'un «spillage» naturel ou accidentel, d'un désastre maritime ou même d'un simple dégazage, le pétrole est recueilli par pompage et transféré à bord d'autres navires réservoirs. D'une part, l'utilisation de boudins flottants destinés à limiter la dispersion des matières polluantes et même de les rassembler dépend essentiellement des conditions atmospériques et de l'état de la mer. Il est admis qu'au-dessus d'un seuil dit de «force 5», correspondant à des creux de 2,5 à 4 m, le procédé de pompage est impossible, dangereux et par conséquent inopérant. D'autre part, l'emploi de produits chimiques ou organiques tels que les dispersants, détergents, solvants, émulsifiants ou simplement à caractère oléophile, conduit à une forme nouvelle de pollution qui s'ajoute à la précédente et est encore plus néfaste pour la biomasse.

A titre d'exemple, on peut citer la demande de brevet français n° 2168060 où on décrit un procédé d'élimination d'huile et analogues d'un mélange d'huile et d'eau comprenant le dépôt de sulfate de calcium hydraté pulvérulent à la surface du mélange d'huile et d'eau, afin de favoriser le mélange de l'huile et de la poudre, et l'entraînement du mélange par gravité.

Le procédé conforme à l'invention a également pour but de résoudre les problèmes posés par les procédés antérieurs, d'en éviter les inconvénients, grâce à l'utilisation de produits particuliers permettant de séquestrer énergiquement les hydrocarbures sans pour cela faillir aux exigences de la sécurité en mer et de la sauvegarde de la nature.

Enfin, dans l'état actuel de la technologie, il est connu que les boues résiduaires constituent un déchet encombrant et d'élimination difficile posant des problèmes de tous ordres et sans cesse croissants aux collectivités, usines, laboratoires, hôpitaux, etc. .... et dont la résolution physico-chimique ne peut s'organiser ponctuellement qu'à grands frais; jusque et y compris la création d'une infrastructure de tranport par voie de terre ou fluviale. Les techniques appliquées à ces boues résiduaires pour leur stabilisation, leur réduction de volume ainsi que leur intégration ou désintégration suivant les cas sont toujours onéreuses à cause de leur complexité, des nécessités de surveillance et de maintenance en milieu nauséabond, et des dépenses d'énergie. Les techniques connues se heurtent à des difficultés invraisemblables: soit qu'elles nécessitent la construction de bacs de grandes surfaces dans le cas de «lits de séchage», occupés pendant des mois par de l'eau croupissante soumise au phénomène naturel mais aléatoire et saisonnier de l'évaporation, soit qu'elles fassent appel à des équipements importants de filtration, de centrifugation et de déshydratation obtenue thermiquement. En outre, les difficultés de séparation des éléments liquide et solide sont aggravées par le caractère colloïdal présenté généralement par les boues.

A titre d'exemple on peut citer le brevet américain n° 3947284 où est décrit un procédé de traitement de boues résiduaires consistant à mélanger à celles-ci du ciment Portland hydraulique et un dérivé du gypse.

Le procédé conforme à l'invention a également pour but de résoudre tous les problèmes posés par les procédés antérieurs de traitement des boues résiduaires, procédés qui sont plus ou moins rudimentaires, incomplets ou insalubres ou encore jugés trop onéreux, d'en éviter les inconvénients en proposant à cet effet une technique particulière, simple et appropriée aux exigences de la salubrité publique, fiable et adaptable à tous les types d'eaux usées ou de boues résiduaires quelles que soient leur origine et leur consistance, produites ou non d'une manière aérobie ou anaérobie, en n'occupant qu'une superficie restreinte et pouvant encore, le cas échéant, s'intégrer dans certains cas à l'intérieur d'installations existantes sans nécessiter de transformations importantes.

Le procédé conforme à l'invention fait appel à l'utilisation et à la mise en œuvre de produits propres à favoriser d'abord, accélerer et entretenir ensuite, le processus de décantation et de réduction de volume des boues résiduaires à plus ou moins forte teneur en eau par séparation et concentration rapide des particules en suspension, permettant ainsi l'extraction et l'élimination facile de la plus grande partie de l'eau excédentaire.

Il ressort de ce qui précède que le procédé conforme à l'invention permet de résoudre efficacement notamment le problème de la pollution des plages par les hydrocarbures, le problème de la récupération en mer des hydrocarbures avant que ceux-ci n'aient atteint les côtes, et le problème posé par les boues résiduaires et ce, grâce à l'utilisation de produits chimiques particuliers qui répondent à toutes les exigences qui peuvent être imposées pour de tels traitements.

Dans ce but, la présente invention a pour objet un procédé pour le traitement de matières polluantes formées d'hydrocarbures présents sous forme de nappes à la surface d'étendues d'eau ou présents sur des plages ou tout autre terrain; de boues résiduaires ou d'eaux usées, consistant à traiter lesdites matières polluantes avec du sulfate de calcium utilisé comme liant hydraulique, pour obtenir un produit résultant facilement manipulable et récupérable afin de pouvoir éliminer ainsi toute trace de pollution, caractérisé en ce qu'on traite lesdites matières polluantes avec du semi-hydrate de sulfate de calcium sous forme ALPHA.

Selon une caractéristique préférée de l'invention, on utilise le liant hydraulique précité additionné d'au moins un autre matériau tel qu'un adjuvant, de la tourbe, des déchets de bois ou de la poussière de charbon.

D'autres avantages, caractéristiques et détails de l'invention apparaîtront plus clairement à la lumière de la description explicative qui va suivre.

On va maintenant décrire en détail le procédé conforme à l'invention appliqué au traitement des hydrocarbures rejetés sur les plages, au traitement des nappes d'hydrocarbures présentes à la surface de la mer, et au traitement des boues résiduaires respectivement.

L'invention prévoit donc dans le cas de la pollution des plages:
- l'emploi aisé de matériaux propres à séquestrer la couche d'hydrocarbures telle qu'elle se présente sur les plages après le retrait de la mer et quelles que soient son épaisseur et sa viscosité, même en présence de quantités d'eau de mer variables et de résidus de végétation aquatique et cela, en un temps court, variable de quelques minutes à une demi-heure, mais cependant maîtrisable et inversement proportionnel à la qualité des mélanges et adjuvants ainsi qu'au taux de gâchage;

– la transformation de la couche d'hydrocarbures en une plaque continue dont la résistance est proportionnelle aux qualités des matériaux mis en œuvre (pourcentage) et aux quantités de matériaux mélangés (épaisseur, taux de gâchage), mais inversement proportionnelle au pourcentage désiré des hydrocarbures séquestrés (ce pourcentage paraissant devoir se situer dans un cas aux environs de 70% en volume), ainsi que du taux de gâchage en eau;

– l'enlèvement après solidification de la plaque ou dalle ainsi constituée, enlèvement rendu plus facile et plus rapide au moyen de chargeurs classiques pour déblaiement et mise en stockage suivant deux choix généraux: déblaiement rapide quelques minutes après l'épandage et le mélange avec des hydrocarbures et aussitôt après le durcissement de la plaque, ou abandon provisoire sur place de la plaque. Cet abandon provisoire peut s'expliquer soit parce que le temps imparti entre deux marées est insuffisant ou parce que l'on désire constituer une protection temporaire contre les infiltrations en profondeur dans le sable, soit par l'apport initial ou de nouveaux dépôts d'hydrocarbures. En effet, l'action mécanique de succion (et par conséquent d'imprégnation) due au retrait de la mer est particulièrement néfaste car la pollution ne s'effectue plus seulement en surface, mais atteint toute l'épaisseur du sable. Enfin, le pourcentage en eau de gâchage peut également être trop élevé, et il convient alors de laisser s'évacuer la majeure partie de·l'eau excédentaire qui n'est pas entrée en combinaison avec le liant de base;

– l'intégration énergétique sous forme granulaire combustible de la plaque précitée, les cendres pouvant ensuite être utilisées dans certains cas comme amendement des terres lourdes.

Comme indiqué précédemment, une caractéristique essentielle du procédé de traitement des hydrocarbures déposés sur les plages consiste à utiliser, comme liant hydraulique, du semi-hydrate de sulfate de calcium sous forme ALPHA, adjuvanté ou non, mélangé ou non à d'autres liants hydrauliques et/ou à des matières organiques jouant le rôle de rétenteurs d'eau et/ou de pétrole par exemple.

Les mélanges suivants ont été essayés avec succès notamment:

– semi-sulfate de calcium sous la forme ALPHA plus hydrocarbures tels quels contenant très peu d'eau de mer, plus tourbe;

– semi-hydrate de sulfate de calcium sous la forme ALPHA, plus hydrocarbures tels quels contenant des pourcentages plus ou moins élevés d'eau de mer, plus tourbe.

Un certain nombre d'adjuvants ont été expérimentés. Les résultats courants ont donné une capacité de séquestration de 50 à 60% en volumes d'hydrocarbures. A titre d'exemple, le mélange suivant (en volumes): semi-hydrate de sulfate de calcium sous la forme ALPHA non adjuvanté (1 partie), plus pétrole brut tel quel (1, 2 partie), plus tourbe (1 partie), a donné en poids pour 100 g: semi-hydrate de sulfate de calcium tel quel et tourbe telle quelle (44 g), pétrole brut tel quel sequestré (56 g).

Les résultats des très nombreux essais systématiques entrepris concernant le choix des liants hydrauliques et organiques s'avèrent extrêmement variables; qu'ils soient mis en œuvre purs pour certains et/ou associés pour d'autres; entre eux-mêmes et/ou avec d'autres matériaux, et à condition de prendre diverses précautions d'emploi et de procéder suivant la ligne générale du schéma retenu par l'esprit de l'invention.

Il apparaît que ce soit le semi-hydrate de sulfate de calcium sous la forme ALPHA, qui ait permis de sequestrer le pourcentage le plus élevé d'hydrocarbures en un temps très court en présentant de bonnes qualités de résistance mécanique même en absence d'eau de mer autrement que sous forme de traces.

Il convient de rappeler ici que la réaction de combinaison des plâtres courants sous la forme BETA et des semi-hydrates de sulfate de calcium sous la forme BETA, nécessite l'emploi de quantités d'eau très supérieures à celles requises par la théorie, uniquement pour des raisons de maniabilité. La réaction chimique des semi-hydrates de sulfate de calcium en présence d'eau est la suivante:

$$SO_4Ca \, \tfrac{1}{2} H_2O + 1\tfrac{1}{2} H_2O = SO_4Ca \, 2 H_2O$$
(réaction exothermique)

Dans un but de simplification, pour 100 g de semi-hydrate de sulfate de calcium, les quantités d'eau entrant dans la combinaison chimique sont approximativement les suivantes:

$$SO_4Ca \, \tfrac{1}{2} H_2O + 1\tfrac{1}{2} H_2O = SO_4Ca \, 2 H_2O$$

| | | |
|---|---|---|
| 5,6 g | 16,5 g | 22 g |
| 5,5% | 16,5% | 22% |

Dans la pratique, les taux de gâchage

$$\frac{EAU}{PLÂTRE} = \left(\frac{E}{P}\right)$$

sont souvent de

$$\frac{80}{100} = \frac{100}{100}$$

et même quelquefois davantage.

Autrement dit, pour satisfaire aux conditions de maniabilité des plâtres en général, il est indispensable de les gâcher avec 5 à 6 fois plus d'eau que la quantité requise théoriquement pour provoquer la combinaison du sulfate de calcium partiellement déshydraté à une demi-molécule d'eau près.

Inversement, en diminuant le taux de gâchage, la maniabilité diminue et devient pratiquement impossible en dessous de 50% (sauf ajouts d'adjuvants et intervention mécanique), mais on diminue aussi le temps de prise. Néanmoins, ce dernier avantage ne compense pas le précédent inconvénient qui a pour conséquence de grever trop lourdement le prix du déblaiement et du transport dans ce cas.

Seul le semi-hydrate de sulfate de calcium sous la forme ALPHA demeure maniable à des taux de gâchage très proches du pourcentage d'eau de combinaison à condition de le mettre en œuvre d'une manière appropriée. Il convient notamment d'éviter l'agglomération des mélanges dans les machines de malaxage.

Particulièrement l'hémi-hydrate de sulfate de calcium sous la forme ALPHA «tel quel» essayé couramment dans le rapport

$$\frac{E}{P} = \frac{30}{100} \; ,$$

donne d'excellents résultats de maniabilité et de résistance mécanique en un temps très court (20 mn environ à 17°C, conditions de plusieurs séries d'expériences). Il semble donc convenable d'utiliser ces propriétés caractéristiques afin d'aboutir à la séquestration du pétrole brut dans de très bonnes conditions de mise en œuvre et de les améliorer par l'incorporation d'autres éléments, comme de la tourbe par exemple, ou des matériaux aux qualités expansives ou rétentrices; en vue de conférer aux mélanges les qualités requises telles que la formation de corps caverneux capables de favoriser la combustion ultérieure des hydrocarbures et ceci quelles que soient les conditions d'humidité, de teneur en eau, la présence de déchets, etc. ...; au moment des opérations de nettoyage.

D'autre part, l'utilisation traditionnelle ou industrielle (préfabrication des plâtres et ciments) a toujours été contrariée en général par la présence des graisses et des huiles qui ont tendance à se rassembler fréquemment par exemple au fond des moules et qui contrecarrent la prise, le durcissement, la tenue des éléments ou des produits; provoquant un rebut important ou nécessitant des reprises onéreuses. Il se trouve qu'apparemment le pouvoir de séquestration de l'hémi-hydrate de sulfate de calcium sous la forme ALPHA ne présente pas cet inconvénient extrême dès lors qu'il est utilisé convenablement. S'il y a effectivement affaiblissement de ses qualités mécaniques résultantes, celles-ci restent néanmoins largement suffisantes pour permettre l'obtention d'une plaque continue, rigide, pouvant être rapidement enlevée, laissant une découverte de terrain parfaitement propre.

Or, les qualités mécaniques de l'hémi-hydrate de sulfate de calcium sous la forme ALPHA, employé pur, à des taux de gâchage en eau très faibles (environ 30%) sont généralement supérieures à celles des bétons de ciment. Elles laissent de ce fait, la possibilité de le mélanger en faibles pourcentages à des produits rétenteurs d'eau ou de pétrole brut, par exemple, bon marché, se trouvant à proximité immédiate (tourbe en Bretagne), lesquels confèrent aux produits ainsi obtenus une structure éminemment caverneuse les rendant plus légers et plus friables mais cependant suffisamment résisants.

Il convient aussi de profiter d'une particularité de l'hémi-hydrate de sulfate de calcium sous la forme ALPHA. En effet, lorsque le mélange en présence d'eau est convenablement réalisé, l'hémi-hydrate de sulfate de calcium sous la forme ALPHA exsude très facilement et très vite l'eau excédentaire d'aspect propre, sans pour autant nuire considérablement aux bonnes qualités mécaniques finales. Tels sont notamment les résultats des nombreux essais réalisés en présence d'eau en quantités importantes.

En résumé, les mélanges obtenus se caractérisent par:
 — un pouvoir élevé de séquestration d'hydrocarbures (jusqu'à 70%),
 — de bonnes qualités mécaniques résultantes,
 — une prise rapide en présence et/en absence d'eau de mer (sauf sous forme de traces),
 — une bonne capacité à ségréger l'eau de mer excendentaire d'aspect propre.

La transformation en dalle ou plaque rigide plus ou moins épaisse, ou encore sous un aspect que l'on peut qualifier de croûte, continue, facilement déblayable et laissant une découverte de terrain particulièrement propre est obtenue par le mélange en quantités prédéterminées des agrégats précités au moyen de camions à bennes du type courant.

Le mélange ainsi formé prend généralement une coloration plus claire, ce qui permet notamment d'apprécier très facilement à distance l'état d'avancment des travaux. Il augmente de volume, s'épaissit, durcit en quelques minutes pour former une plaque qui laisse rapidement exsuder l'eau de mer excédentaire. La récupération de cette plaque dont l'épaisseur est fonction des quantités d'ingrédients brassés devient très aisée et, fait très important, laisse une découverte de terrain propre à l'aspect initial, exempte d'impuretés et de traces d'hydrocarbures. L'enlèvement peut alors être immédiatement entrepris et la mise en stockage peut avoir lieu en vue d'opérer un séchage supplémentaire dans le cas d'incorporation peu importante d'eau de mer. Dans un deuxième cas et pour les raisons précitées, il peut être avantageux ou nécessaire d'abandonner sur place la croûte ainsi formé pendant un certain temps.

L'intégration énergétique sous forme granulaire combustible (au même titre que le charbon) est rendue d'autant plus aisée que le mélange présente une bonne résistance mécanique (afin d'éviter l'émittement) que le pourcentage en hydrocarbures séquestrés est d'autant plus élevé, qu'il contient le maximum de tourbe par exemple dont les qualités calorfiques viennent s'ajouter à celles du pétrole brut et dont la présence améliore en même temps, par la création d'un corps éminemment caverneux, le dégagement des gaz inflammables.

Les granulés ainsi brûlés se retrouvent sous forme de petites pierres blanches, spongieuses prouvant, par leur coloration totale et la disparition de leur mauvaise odeur que la combustion des hydrocarbures séquestrés a bien été complète, y compris les goudrons. Ils se présentent sous l'aspect plus ou moins friable du pouzzolane et, dans certains cas, constitués essentiellement des $SO_4Ca$ destinés à être moulus. Ils peuvent être utilisés sous forme de poudre comme amendement des terres argileuses, terminant sous cette apparence le cycle d'élimination complet de la pollution et la récupération totale des mélanges précités.

Comme cela a été clairement explicité précédemment, le procédé conforme à l'invention permet également de traiter les nappes d'hydrocarbures à la surface de la mer, c'est-à-dire avant que celles-ci viennent polluer les plages. Pour cela, le procédé fait appel à l'utilisation et à la mise en œuvre de différents produits de densité variable pouvant être supérieure à 1 dans certains cas, propres à séquestrer les particules des hydrocarbures, mais dont la capacité de flotter à la surface de l'eau peut rester permanente, non seulement en ce qui concerne les produits combinés résultants, mais également pour les produits qui, pour des raisons particulières, n'auraient pu jouer le rôle d'absorbant ou de séquestrant; capacité de flotter sous une forme solide permettant le chalutage et la récupération totale des différents morceaux ainsi constitués en évitant la propagation de la pollution aussi bien en surface que dans la masse aquatique elle-même, ainsi que sur les fonds marins.

Comme dans l'application précédente, le produit de base utilisé est de l'hémi-hydrate de sulfate de calcium sous la forme ALPHA, adjuvanté et/ou additionné d'autres produits pulvérulents de densité élevée tels que des sulfates de calcium dihydratés sous la forme ALPHA et/ou BETA. Bien entendu, ce produit doit être compatible avec les conditions de mise en œuvre par gros temps et grand vent de telle sorte qu'il ne soit pas emporté par les éléments et qu'il puisse rapidement faire prise dans ce cas précis en présence des hydrocarbures.

Les constituants pulvérulents, bien que présentant une densité apparente et variable, tantôt inférieure à 1, tantôt supérieure à 1 et même davantage, en fonction des conditions d'emploi, sont adjuvantés de telle sorte que le produit préconisé, à la fois très oléophile et partiellement hydrophobe puisse surnager dans certains cas. L'utilisation de poudres neutres d'enrobage à haut pouvoir couvrant est citée à titre d'exemple comme adjuvant. Les parties combinées aux hydrocarbures durcissent et peuvent flotter à la surface de la mer en prenant une coloration plus claire aussi bien que celle qui n'auraient pu parvenir à séquestrer le pétrole et qui, elles, se distinguent par leur aspect blanchâtre. L'ensemble peut être alors recueilli par chalutage par exemple.

Les produits combinés ont subi préalablement une préexpansion ou subissent une expansion au moment de la réaction et peuvent flotter à la surface de l'eau pour cette raison. Dans d'autres cas au contraire, il convient de les densifier pour qu'ils se maintiennent entre deux eaux ou qu'ils coulent afin de colmater une ouverture produite dans une coque de navire ou dans une fissure des fonds marins.

Le procédé permet d'utiliser le produit de base sous une forme pâteuse stabilisée, comme injection sous forte pression, en prenant soin de le réactiver à volonté soit à l'aide d'un liquide, d'un gaz ou de tout autre matière.

Pour mettre en œuvre ce procédé dans le cas de traitement des nappes d'hydrocarbures, il est utilisé des dispositifs de projection et d'épandage soit par voie maritime, soit par voie aérienne permettant de mettre en contact les produits de traitement et de séquestration avec la masse polluante quels que soient l'état de la mer et les conditions atmosphériques . Le procédé permet d'obteni une bonne agglomération constante des différents constituants.

Après récupération, leur incorporation dans des chaudières de centrales thermiques est tout à fait possible: les cendres étant recyclables ou utilisables comme amendement des terres lourdes et argileuses ainsi que substrat d'engrais divers.

Enfin, le procédé conforme à l'invention fait appel à l'utilisation et à la mise en œuvre de différents produits propres à favoriser d'abord, accélérer et entretenir ensuite le processus de décantation et de réduction de volume des boues résiduaires à plus ou moins forte teneur en eau par séparation et concentration rapide des particules en suspension, permettant ainsi l'extraction et l'élimination facile de la plus grande partie de l'eau excédentaire.

Dans le cas de traitement de masses polluantes telles que des boues résiduaires, le procédé consiste notamment:

— à choisir des produits de base pris ensemble ou séparément, additionnés ou adjuvantés de produits complémentaires en fonction du degré d'épuration souhaitable des eaux libres et de la consistance du déchet minéralisé résultant composé des particules séquestrées et des ingrédients combinés,

— à employer d'une façon aisée et simple les matériaux de base précités pris séparément ou mélangés au préalable, ainsi que leur brassage avec les eaux usées ou avec les boues résiduaires, propres à amorcer, accélérer, entretenir le processus de séparation et de ségrégation pour aboutir in fine à la séquestration de toutes les particules solides en suspension quelles que soient leur forme et leur origine minérale ou organique afin de laisser une eau libre, limpide et plus ou moins pure en fonction du but à atteindre en un laps de temps court de l'ordre de 15 mn environ,

— à utiliser un matériel spécifique de brassage peu onéreux, aisément adaptable sur des réservoirs existants ou non, à transformer les particules solides sous forme de «gâteau» de consistance au préalablement définie, soit sous forme friable et pelletable d'aspect de terre légère humide, soit sous forme plus résistance d'une plaque ou dalle facilement déblayable,

– à intégrer sous différentes formes d'amendements et d'engrais ou de substrats d'engrais chimiques ou organiques complémentaires, ou à désintégrer par incinération ou à stériliser ou à minéraliser sous forme de matériaux de construction.

Comme précédemment, le produit utilisé pour traiter ces eaux résiduaires est le semi-hydrate de sulfate de calcium sous la forme ALPHA de qualité ordinaire additionnés ou non, adjuvantés ou non, mélangés ou non à d'autres liants hydrauliques d'origine minérale ou organique, à des produits chimiques eux-même d'origine minérale ou organique faisant effet d'épurateurs, de stérilisateurs, de désinfectants, de floculants, d'agglomérants, de bactéricides, de fongicides ou au contraire vecteurs de bactéries ou de champignons, etc....., éventuellement soumis ou non à des influx électriques ou magnétiques.

Les résultats des essais systématiques entrepris dans le cadre de ces applications et plus particulièrement celles concernant le choix des liants minéraux et organiques s'avèrent extrêmement variables, qu'ils soient mis en œuvre purs pour certains et/ou associés pour d'autres; entre eux-mêmes et/ou avec d'autres matériaux, et à condition de prendre diverses précautions d'emploi et de procédé suivant la ligne générale du schéma retenu par l'esprit de l'invention et bien que la description de celle-ci ne constitue que l'un des nombreux exemples qu'il serait facile de faire ressortir et comportant de nombreuses variantes. Il apparaît que ce soit l'hémi-hydrate de sulfate de calcium sous la forme ALPHA qui permette davantage que d'autres liants, de séquestrer plus facilement les particules en suspension quel que soit le volume d'eau en présence. Il convient de rappeler que la réaction de combinaison des semi-hydrates de sulfate de calcium sous la forme BETA entraîne généralement, en présence d'eau largement excédentaire, une rétention de liquide beaucoup plus importante que ne le fait celle des hémi-hydrates de sulfate de calcium sous la forme ALPHA.

Par ailleurs, ces derniers sont moins sensibles à la présence de déchets humiques. De ce fait, la plage d'utilisation des hémi-hydrates de sulfate de calcium sous la forme ALPHA n'est guère modifiée et la vitesse de sédimentation reste sensiblement constante dans tous les cas.

La transformation des eaux usées et des boues résiduaires en eau libre d'aspect clair et limpide, séparée des particules en suspension, rassemblées et séquestrées au fond d'un bassin sous forme de «gâteau» de consistance prédéterminée, fait appel aux notions suivantes dont la citation n'est pas exhaustive ni l'examen succinct limitatif.

Après brassage énergique de l'hémi-hydrate de sulfate de calcium sous la forme ALPHA choisie, employé pur ou mélangé à d'autres produits, soit dans le milieu aqueux considéré, soit «à la continue» au moment du remplissage du bassin et qui se présente initialement sous un aspect pulvérulent, généralement de densité supérieure à 1 et pouvant atteindre fréquemment celle de 1,5 et même plus, on observe une préphase de réaction latente correspondant à la phase de «mouillage» des grains du liant et qui peut varier suivant les qualités des produits mis en œuvre de quelques secondes à quelques minutes.

L'hydratation subséquente des grains a pour conséquence d'augmenter leur densité, de libérer un pH légèrement différent du pH initial qui «casse» le phénomène de suspension. Très rapidement alors, quelques millimètres d-eau libérée apparaissent à la surface du bassin. L'agglomération colloïdale débute ensuite, s'entretient, s'accélère durant toute la phase de maniabilité dite encore «plage d'utilisation» qui correspond en fait à une pré-prise du liant ou début de resincristallisation latente. Les cristaux grossissent (en sachant que leurs formes et leurs textures peuvent être prédéterminées au moment de la fabrication des hémi-hydrates de sulfate de calcium sous la forme ALPHA) apparaissant à volonté sous l'aspect d'aiguilles plus ou moins longues ou de parallélépipèdes rectangles plus ou moins volumineux. Cette particularité présente le plus grand intérêt en vue de la détermination optimisée d'un hémi-hydrate de sulfate de calcium sous la forme ALPHA particulier requise par le meilleur traitement des eaux usées ou des boues résiduaires dans tel ou tel cas. C'est pourquoi on ne peut parler d'un hémi-hydrate de sulfate de calcium sous la forme ALPHA au singulier mais d'hémi-hydrates de sulfate de calcium sous la forme ALPHA au pluriel.

Les cristaux ensuite commencent alors à opérer une descente vers le fond du bassin créant un effet de filtration autocinétique verticale dirigé de haut en bas ce qui explique la relative lenteur de sédimentation due au «freinage» des particules en suspension. Les impuretés s'imbriquent dans le réseau cristallin et sont entraînées de plus en plus vite vers le bas au fur et à mesure que les cristaux grossissent davantage et s'agglomèrent tout en augmentant de densité sous l'action des combinaisons chimiques. La séparation se stabilise en un laps de temps court, de 15 mn environ et laisse apparaître nettement deux parties bien délimitées: l'une caractérisée par son aspect limpide constituée par de l'eau claire provenant de la décomposition des éléments en suspension par rapport à l'autre représentée par le liant de séquestration combinée et renfermant toutes les particules solides du liquide initial.

Il convient de remarquer que le volume d'eau recueillie est maximum:

– en employant un hémy-hydrate de sulfate de calcium sous la forme ALPHA approprié,

– lorsque la prise est elle-même terminée.

Le durcissement de la plaque permet de récupérer les deux produits de décomposition d'une manière aisée: l'eau libre pour être rejetée ou recyclée; la plaque pour être réduite et constituer suivant le cas un amendement et un engrais, ou encore un substrat de d'engrais chimiques et organiques complémentaires, ou transformée en matériaux de construction ou plus simplement incinérée. Autrement dit, le procédé permet d'obtenir des boues suffisamment concentrées et de consistance optimum pour être manipulables, et assure par conséquent un traitement complet et une élimination définitive des boues résiduaires issues notamment des stations d'épuration des eaux usées.

Il est églament important d'ajouter qu'étant donné la nature des nombreux additifs incorporables aux liants de base, certaines formulations du produit sont utilisables avantageusement pour la sécurité et pour la protection des installations contre le feu comme enduit, d'autres pour l'extinction des incendies par projection et épandage (par exemple à partir d'un avion du type «canadair») en tant que pulvérulents difficilement décomposables par la chaleur; certaines autres pour l'occlusion des forages par incorporation aux boues et ceci grâce à leurs facultés élevées de durcissement et de contrôle de leur plage d'utilisation potentiellement variable à volonté.

Dans tous les cas, les produits utilisés par le procédé conforme à l'invention se caractérisent par une action non destructive et une inocuité parfaite vis-à-vis de la biomasse et agissent en tant que moyens préservatifs de la flore et de la faune. De plus, certains produits dégagés par certains de leurs composants sont favorables à la vie terrestre et aquatique et peuvent servir de nourriture au phytoplancton.

Il ressort de ce qui précède, que les semi-hydrates de sulfate de calcium sous la forme ALPHA, sont particulièrement avantageux pour la lutte contre des masses liquides polluantes comme par exemple les hydrocarbures, les boues résiduaires, etc. ... Bien évidemment, ces applications ne sont données qu'à titre d'exemple, et il est tout à fait envisageable d'appliquer le procédé conforme à l'invention à d'autres matières polluantes ou non se présentant sous forme liquides ou pâteuses.

Il est important de noter que les liants utilisés conformément à l'invention sont de préférence, sous forme pulvérulente avant leur utilisation.

Dans le cas de traitement d'hydrocarbures, il est important de noter que le procédé conforme à l'invention mélange avantageusement le liant de base utilisé avec des matériaux fins tels que des adjuvants et/ou des matériaux plus grossiers comme de la tourbe de façon à augmenter sensiblement le pouvoir de séquestration et de rétention. On peut également ajouter d'autres matériaux de façon à donner au produit résultant du traitement des hydrocarbures par le liant, une structure caverneuse qui facilite la restitution des gaz et des matières combustibles lorsque l'on brûle ce produit. Dans ce cas, on utilise avantageusement comme matériaux additionnels de la tourbe, des déchets de bois, de la poussière de charbon, ...

Il est également important de noter que dans tout les cas, le liant hydraulique utilisé se caractérise par son action non destructrice et son inocuité parfaite vis-à-vis de la biomasse et agissant en tant que moyen préservatif de la flore et de la faune. En outre, les produits dégagés par certains composants des liants utilisés sont favorables à la vie terrestre et aquatique et peuvent servir de nourriture au phytoplancton.

Dans le cas de traitement d'eaux usées ou de boues résiduaires quelles que soient leur origine et leur consistance, préalablement traitées ou non, résultant ou non d'une transformation aérobie ou anaérobie, stockées ou non dans des réservoirs, le procédé consiste soit à brasser dans le liquide en présence, soit à mélanger «à la continue» au moment du remplissage d'un bassin par exemple, un liant hydraulique tel que défini précédemment, employé pur ou associé à d'autres matériaux, à laisser décomposer et décanter la suspension pour recueillir l'eau libre des particules séquestrées assemblées au fond et solidifiées. Dans ce procédé, il est important de noter que l'opération de décomposition s'effectue en une seule phase et très rapidement, de l'ordre de quelques minutes. Le liant utilisé peut être également mélangé à d'autres matériaux tels que de la tourbe pour donner aux boues une fois traités une structure caverneuse.

## Revendications

1. Procédé pour le traitement de matières polluantes formées d'hydrocarbures présents sous forme de nappes à la surface d'étendues d'eau ou présents sur des plages ou tout autre terrain; de boues résiduaires ou d'eaux usées, consistant à traiter lesdites matières polluantes avec du sulfate de calcium utilisé comme liant hydraulique pour obtenir un produit résultant facilement manipulable et récupérable afin de pouvoir éliminer ainsi toute trace de pollution, caractérisé en ce qu'on traite lesdites matières polluantes avec du semi-hydrate de sulfate de calcium sous forme ALPHA.

2. Procédé selon la revendication 1, caractérisé en ce que le liant hydraulique précité se présente sous forme pulvérulente.

3. Procédé selon la revendication 1 ou 2, carctérisé en ce qu'il consiste à utiliser le liant hydraulique précité additionné d'au moins un autre matériau, tel qu'un adjuvant, de la tourbe, des déchets de bois ou de la poussière de charbon.

4. Procédé selon l'une des revendications 1 à 3, notamment pour le traitement des nappes d'hydrocarbures rejetées sur les côtes, caractérisé en ce qu'il consiste à épandre et à mélanger au sable ou tout terrain pollué une couche d'épaisseur prédéterminée du liant précité pour faire prise et durcir rapidement en présence de quantités d'eau de mer variables pour donner un produit résultant sous la forme d'une plaque ou dalle sensiblement continue, et à enlever cette plaque par morceaux facilement déblayables laissant une découverte de terrain propre.

5. Procédé selon la revendication 4, caractérisé en ce qu'il consiste ensuite à réduire les morceaux de la dalle précitée en granulés, à brûler ces granulés dont les cendres exemptes de toute trace d'hydrocarbures sont sensiblement composées de $CaSO_4$, à moudre ces cendres pour servir d'amendement de terres lourdes et argileuses, la molécule de sulfate de calcium cassant la molécule d'argile.

6. Procédé selon la revendication 4 ou 5, caractérisé en ce qu'il consiste à brasser de façon intime «à la continue» le liant précité avec la couche d'hydrocarbures à séquestrer telle qu'elle se présente sur le terrain pollué en évitant une trop grande incorporation de sable.

7. Procédé selon l'une des revendications 4 à 6, caractérisé en ce qu'il consiste à abandonner la plaque ou dalle obtenue après traitement de la couche d'hydrocarbures par le liant précité pour permettre l'exsudation de l'eau excédentaire.

8. Procédé selon l'une des revendications 1 à 3, pour permettre la séparation des matières polluantes en suspension dans les liquides, notamment pour traiter des nappes d'hydrocarbures à la surface de la mer, caractérisé en ce qu'il consiste à mettre en contact ces nappes avec le liant précité pour séquestrer les particules d'hydrocarbures et obtenir une bonne agglomération des différents constituants, et à récupérer le produit résultant ainsi aggloméré par exemple par chalutage.

9. Procédé selon la revendication 8, caractérisé en ce qu'il consiste à utiliser le liant précité additionné de sulfate de calcium di-hydraté sous la forme ALPHA et/ou BETA.

10. Procédé selon l'une des revendications 1 à 3, pour assurer le traitement des eaux usées et boues résiduaires, caractérisé en ce qu'il consiste, soit à brasser dans le liquide présent dans le réservoir de stockage desdites eaux usées ou boues résiduaires le liant précité, soit à mélanger ce dernier «à la continue» au moment du remplissage du réservoir, à laisser décomposer et décanter la suspension pour recueillir l'eau libre des particules séquestrées rassemblées au fond en «un gâteau» solidifié et à extraire ce gâteau par des moyens appropriés.

## Patentansprüche

1. Verfahren zur Behandlung von Verschmutzungsstoffen bestehend aus am Spiegel von Wasserflächen oder auf Stränden oder irgendeinem anderen Gelände als Flecke vorhandenen Wasserstoffen; aus Restschlammen oder Abwasser, wobei es darin besteht, die besagten Verschmutzungsstoffe mit als hydraulisches Bindemittel verwendeten Kalziumsulfat zu behandeln, um ein leicht zu handhabendes und rückzugewinnendes Erzeugnis zu erhalten, um somit jede Spur von Verschmutzung beseitigen zu können, dadurch gekennzeichnet, dass man die besagten Verschmutzungsstoffe mit Kalziumsulfatsemihydrat in ALPHA-Form behandelt.

2. Verfahren nach Anspruch 1, dadurch gekennzeichnet, dass das vorgenannte hydraulische Bindemittel sich im gepulverten Zustand darbietet.

3. Verfahren nach Anspruch 1 oder 2, dadurch gekennzeichnet, dass es in der Verwendung des mit wenigstens einem anderen Stoff, wie einem Hilfsmittel, Torf, Holzabfällen oder Kohlenstaub zugesetzten vorgenannten hydraulischen Bindemittels besteht.

4. Verfahren nach einem der Ansprüche 1 bis 3, insbesondere für die Behandlung von an den Ufern abgeworfenen Kohlenwasserstoffflecken, dadurch gekennzeichnet, dass es darin besteht, eine Schicht des vorgenannten Bindemittels von vorbestimmter Dicke auszustreuen und mit verschmutztem Sand oder irgendeinem Gelände zu vermischen zwecks schneller Abbindung und Härtung in Gegenwart von veränderlichen Seewassermengen, um ein resultierendes Erzeugnis in der Form einer im wesentlichen durchlaufenden Platte oder Decke zu erzielen, und diese Platte in leicht abzuräumenden Stücken wegzunehmen und dabei sauberes Gelände aufzudecken.

5. Verfahren nach Anspruch 4, dadurch gekennzeichnt, dass es darin besteht, dann die Stücke der vorgenannten Decke in Granulate zu zerkleinern, diese Granulate, deren von jeder Spur von Kohlenwasserstoffen freie Asche sich im wesentlichen aus $CaSO_4$ zusammensetzt, zu verbennen, diese Asche zu mahlen, um als Düngungsmittel für schwere, lehmige Erde zu dienen, wobei das Kalziumsulfatmolekül das Lehmmolekül zerbricht.

6. Verfahren nach Anspruch 4 oder 5, dadurch gekennzeichnet, dass es darin besteht, das vorgenannte Bindemittel mit der zu sequestrierenden Schicht von Kohlenwasserstoffen, wie sie auf dem verschmutzten Gelände anfällt, innig in «kontinuierlicher» Weise durchzurühren, unter Vermeidung einer zu grossen Beimengung von Sand.

7. Verfahren nach einem der Ansprüche 4 bis 6, dadurch gekennzeichnet, dass es darin besteht, die nach der Behandlung der Schicht von Kohlenwasserstoffen mit dem vorgenannten Bindemittel erhaltene Platte bzw. Decke stehen zu lassen, um das Ausschwitzen des überschüssigen Wassers zu ermöglichen.

8. Verfahren nach einem der Ansprüche 1 bis 3, um die Abscheidung der sich in den Flüssigkeiten in Suspension befindenden Verschmutzungsstoffe zu ermöglichen, insbesondere zur Behandlung von Kohlenwasserstoffflächen am Meeresspiegel, dadurch gekennzeichnet, dass es darin besteht, diese Flächen mit dem vorgenannten Bindemittel in Berührung zu bringen, um die Teilchen von Kohlenwasserstoffen zu sequestrieren und ein gutes Zusammenballen der verschiedenen Bestandteile zu erzielen und das derart zusammengeballte resultierende Erzeugnis zum Beispiel durch Schleppnetzfischerei zurückzugewinnen.

9. Verfahren nach Anspruch 8, dadurch gekennzeichnet, dass es in der Verwendung des vorgenannten Bindemittels unter Beimengung von dihydriertem Kalziumsulfat in ALPHA- und/oder BETA-Form besteht.

10. Verfahren nach einem der Ansprüche 1 bis 3, um die Behandlung der Abwasser und Restschlämme zu gewährleisten, dadurch gekennzeichnet, dass es darin besteht, entweder das vorgenannte Bindemittel in der in dem Behälter zum Speichern der besagten Abwasser oder Restschlämme vorhandenen Flüssigkeit durchzurühren, oder das Bindemittel in «kontinuierlicher» Weise beim Füllen des Behälters durchzumischen, die Suspension sich zersetzen und klären zu lassen, um das freie Wasser der in einem verfestigten «Kuchen» am Boden zusammengesammelten sequestrierten Teilchen aufzufangen und diesen Kuchen mit geeigneten Mitteln auszuziehen.

## Claims

1. Method for the treatment of polluting materials consisting of hydrocarbons present as sheets at the surfaces of stretches of water or present on beaches or on any other ground; of waste sludges or sewage water, consisting in processing the said polluting materials with calcium sulphate used as an hydraulic binder for obtaining a resulting product easy to handle and to recover in order to be able to thus remove any trace of pollution, characterized in that the said polluting materials are processed with calcium sulphate semi-hydrate in the ALPHA-form.

2. Method according to claim 1, characterized in that the aforesaid hydraulic binder presents itself in a powdery condition.

3. Method according to claim 1 or 2, characterized in that it consists in using the aforesaid hydraulic binder admixed with at least another material such as an additive, peat, wood scraps or coal dust.

4. Method according to one of claims 1 to 3, in particular for the treatment of the sheets of hydrocarbons cast up on the coasts, characterized in that in consists in spreading and in admixing to the polluted sand or ground whatsoever a layer of predetermined thickness of the aforesaid binder for setting and hardening quickly in the presence of variable amounts of sea water to provide a resultant product in the form of a substantially continuous plate or slab, and in removing this plate in pieces easy to be cleared away leaving an exposure of clean land.

5. Method according to claim 4, characterized in that it then consists in reducing the pieces of the aforesaid slab into pellets, in burning these pellets the ashes of which devoid of any trace of hydrocarbons consist substantially of $CaSO_4$, in grinding these ashes for serving as an improvement of heavy and clayey soils, the molecule of calcium sulphate breaking the molecule of clay.

6. Method according to claim 4 or 5, characterized in that it consists in stirring in an intimate manner «in a continuous way» the aforesaid binder with the layer of hydrocarbons to be secluded such as it presents itself on the polluted ground while avoiding too great an incorporation of sand.

7. Method according to one of claims 4 to 6, characterized in that it consists in leaving the plate or slab obtained after the treatment of the layer of hydrocarbons by the aforesaid binder to allow the exudation of the excess water.

8. Method according to one of claims 1 to 3, to allow the separation of the polluting materials in suspension in the liquids, in particular for processing sheets of hydrocarbons at the sea surface, characterized in that it consists in putting these sheets in contact with the aforesaid binder for secluding the particles of hydrocarbons and obtaining a good agglomeration of the different components, and in recovering for instance through trawling the resulting product thus agglomerated.

9. Method according to claim 8, characterized in that in consists in using the aforesaid binder admixed with the di-hydrates calcium sulphate in the ALPHA and/or BETA form.

10. Method according to one of claims 1 to 3, to provide for the treatment of sewage water and waste sludges, characterized in that it consists, either to stir the aforesaid binder into the liquid present in the tank for storing of the said sewage water or waste sludges or in mixing said binder in «a continuous manner» when filling the tank, in allowing the suspension to decompose and to settle for recovering the free water of the secluded particles gathered on the bottom into a solidified «cake» and in extracting this cake by suitable means.